# EUROPÄISCHE PATENTANMELDUNG

(11) **EP 4 597 661 A1**
(43) Veröffentlichungstag der Anmeldung: **06.08.2025**
(21) Anmeldenummer: 25151780.1
(22) Anmeldetag: 14.01.2025
(51) Int. Cl.: H01M 10/04, H01M 10/16, H01M 50/103

(54) **ENERGIESPEICHEREINHEIT**

(30) Priorität: 01.02.2024 DE 102024102881
(71) Anmelder: Carl Freudenberg KG, 69469 Weinheim (DE)
(72) Erfinder: Szparagowski, Raymond, Bowling Green, 43402 (US); LEICHNER, Dr. Tim, 67591 Mörstadt (DE); Sundararaman, Saikrishna, Ann Arbor, 48104 (US); Kritzer, Peter, Dr., 67147 Forst (DE)

(57) **Zusammenfassung**

Die Erfindung betrifft eine Energiespeichereinheit (10) aufweisend: eine Elektroden-Separator/Elektrolyt-Einheit (12), wobei die Elektroden-Separator/Elektrolyt-Einheit (12) dazu eingerichtet ist, elektrische Energie aufzunehmen und/oder abzugeben, wobei die Elektroden-Separator/Elektrolyt-Einheit (12) zumindest ein erstes Begrenzungselement (18) aufweist, wobei das erste Begrenzungselement (18) zumindest teilweise eine Außenseite (16) der Elektroden-Separator/Elektrolyt-Einheit (12) ausbildet, wobei die Energiespeichereinheit (10) eine Verbindungseinheit (20) aufweist, wobei die Verbindungseinheit (20) an dem ersten Begrenzungselement (18) angeordnet ist, wobei die Verbindungseinheit (20) dazu eingerichtet ist, eine Volumenänderung der Elektroden-Separator/Elektrolyt-Einheit (12) zu folgen.

## Beschreibung

Die vorliegende Erfindung betrifft eine Energiespeichereinheit, ein Verfahren zur Herstellung einer Energiespeichereinheit, ein Fahrzeug sowie ein Batteriespeichersystem.

Derzeit besteht eine Vielzahl von unterschiedlichen Lösungen zum Aufbau von Batteriezellen und Akkusystemen. Durch die zunehmende Anzahl an Akkusystemen aufgrund der Mobilitätswende und der erhöhten Leistungsanforderung steigt kontinuierlich der Bedarf an Innovationen, die Akkusysteme robuster machen.

Die stetige Gewichtsreduzierung im Fahrzeugbau zur Verbrauchsverringerung sowie der zunehmende Wettbewerb sorgen für Kostendruck, sodass günstigere und effizientere Komponenten für Fahrzeuge stärker nachgefragt werden.

### Offenbarung der Erfindung

Mit Ausführungsformen der Erfindung kann vorteilhafterweise eine verbesserte Energiespeichereinheit bereitgestellt werden. Die Erfindung ist in den unabhängigen Ansprüchen definiert. Vorteilhafte Weiterbildungen der Erfindung ergeben sich aus den abhängigen Ansprüchen und der nachfolgenden Beschreibung.

Ein Vorteil der Energiespeichereinheit mit den Merkmalen des Anspruchs 1 ist, dass mit der Hilfe des sich anpassenden Gehäuses eine Veränderung des Volumens der Elektroden-Separator/Elektrolyt-Einheit gezielt folgen lässt. Ein weiterer Vorteil ist, dass die Volumenausdehnung der Einzelzelle durch das Zellgehäuse kompensiert werden kann, so dass der Zellstack im Modul, keinen Mehrplatz im ausgedehnten Zustand benötigt. Bspw. kann sich die Erstreckungslänge der Elektroden-Separator/Elektrolyt-Einheit durch deren Ladezustand verändern. Durch die Verbindungseinheit der Energiespeichereinheit kann das Volumen bzw. der Volumenveränderung entsprechend korrigiert bzw. angepasst werden.

Die wird erfindungsgemäß dadurch erreicht, dass die Energiespeichereinheit eine Elektroden-Separator/Elektrolyt-Einheit aufweist, wobei die Elektroden-Separator/Elektrolyt-Einheit dazu eingerichtet ist, elektrische Energie aufzunehmen und/oder abzugeben. Die Elektroden-Separator/Elektrolyt-Einheit weist zumindest ein erstes Begrenzungselement auf, wobei das erste Begrenzungselement zumindest teilweise eine Außenseite der Elektroden-Separator/Elektrolyt-Einheit ausbildet, wobei die Energiespeichereinheit eine Verbindungseinheit aufweist, wobei die Verbindungseinheit an dem ersten Begrenzungselement angeordnet ist, wobei die Verbindungseinheit dazu eingerichtet ist, eine Volumenänderung der Elektroden-Separator/Elektrolyt-Einheit zu folgen.

In anderen Worten kann die Elektroden-Separator/Elektrolyt-Einheit sich aufgrund des Ladezustands, Alterungsprozessen oder ähnlichem in ihrem Volumen verändern. Um eine Umwandlung der Elektroden-Separator/Elektrolyt-Einheit an die Volumenänderung der Elektroden-Separator/Elektrolyt-Einheit anpassen zu können, weist die Energiespeichereinheit eine Verbindungseinheit auf, wie bspw. ein folienähnliches Element, welches dazu eingerichtet, mittels seiner Elastizität und/oder Flexibilität die Volumenänderung der Elektroden-Separator/Elektrolyt-Einheit folgen zu können. Das Folgen mittels einer Verbindungseinheit Energiespeichereinheit umfasst bevorzugt sowohl eine Volumenzunahme als auch eine Volumenabnahme oder ähnliches. Bevorzugt kann die Energiespeichereinheit in einem Gehäuse anordenbar sein. Bevorzugt kann es sich bei einem Folgen der Volumenänderung insbesondere um ein Kompensieren der Volumenänderung durch die Verbindungseinheit handeln.

Bspw. kann die Elektroden-Separator/Elektrolyt-Einheit bzw. der innenliegende Elektrodenseparator-Stack eine Hohedickenänderung während der Lade- bzw. Endladevorgänge aufweisen. Weiter bevorzugt kann die Elektroden-Separator/Elektrolyt-Einheit auch eine kontinuierliche Dickenzunahme über ihre Lebensdauer aufweisen. Dabei kann diese Dickenänderung zumindest 5% von der ursprünglichen Dicke der Elektroden-Separator/Elektrolyt-Einheit betragen, jedoch weiter bevorzugt 10% und/oder sogar 15% oder mehr. Diese Dickenänderungen können insbesondere bei Lithiumzellen auftreten, die auf der Anodenseite eine Graphitelektrode mit einer Siliziumdotierung von mehr als 15% aufweist, eine Siliziumelektrode, eine Lithiummetallfolienelektrode und/oder ähnliches umfassen. Dies kann bei einer Zellchemie auftreten mit flüssigen Elektrolyten ("Lithium-Ionen-Zellen") als auch bei solchen mit immobilisierten oder Feststoff-Elektrolyten ("Solid-State-Zellen").

Weiter bevorzugt kann die Elektroden-Separator/Elektrolyt-Einheit bzw. der innenliegende Elektrodenseparator-Stack in einer vorbestimmten Ausrichtung oder ähnlichem verpresst werden. Hierbei kann zwischen einer erfolgreichen Verpressung unterschieden werden, bei welcher die Lade- und Entladevorgänge unterstützt werden, um z.B. das mechanische Zerfallen von Aktivmaterial mit nachfolgendem Verlust der elektronischen Anwendung zu vermeiden. Weiterhin können Verpressungen notwendig sein, um z.B. bei Solid-State-Zellen bei sich auflösenden Elektroden jederzeit einen mechanischen Kontakt zwischen Elektrode und Separator/Elektrolyt sicher zu stellen.

Weiter bevorzugt können unerfolgreiche Verpressungen bestehen, die sich beim Laden dahingehend unterscheiden, dass sich das Lithium nicht wie definiert in oder an der Anode abscheidet und sich somit ein Dendritenwachstum einstellen kann. Dabei kann eine Vielzahl von Zwischenzustände zwischen erfolgreichen und unerfolgreichen Verpressungen auftreten, welche insbesondere in Abhängigkeit der Zellchemie als auch der Betriebsstrategie des Batteriemanagements zugeordnet werden können. Weiter bevorzugt kann eine Zelle mit flüssigen Elektrolyten die erfolgreichen Verpressungen im Bereich von 50 bis 100 kPA und bei der Verwendung von Feststoffelektrolyten können Werte von deutlich über 100 kPa benötigt werden, um die lonenleitung durch den Elektrolyten verlässlich einzustellen.

Dabei können unerfolgreiche Verpressungen auftreten, wenn zu geringe Verpressungsdrücke angewandt werden, bspw. unter 100 kPa bei Flüssigelektrolyten sowie bspw. bei unter 1 MPa bei Feststoffelektrolyten.

Bevorzugt kann die Energiespeichereinheit mithilfe der Verbindungseinheit ein flexibles Gehäuse bereitstellen, welches es ermöglicht reversible Dickenänderungen der Elektroden-Separator/Elektrolyt-Einheit von bis zu mehr als 10% zu folgen, wobei das Zellgehäuse flächig zum Elektrodenseparator-Stack flexiblen Gehäuse anliegt und somit mit einer definierten Kraft beaufschlagt werden kann.

Bspw. kann die Verbindungseinheit eine elastischere Verformung bereitstellen, welche eine Ausdehn- bzw. Volumenverringerung der Elektroden-Separator/Elektrolyt-Einheit folgen kann. Bevorzugt kann die Verbindungseinheit eine Art Folie ausgebildet sein, die aus einem Elastomer, einem Thermoplast, einem Metall und/oder einem Thermoplast-Metallverbund oder ähnlichem ausgebildet sein kann.

Die Unteransprüche zeigen bevorzugte Weiterbildungen der Erfindung.

Bevorzugt weist die Verbindungseinheit zumindest ein Material und/oder eine Form auf, welche dazu eingerichtet ist, die Volumenänderung der Elektroden-Separator/Elektrolyt-Einheit zu folgen, wobei das Material ein Elastomer, ein Kunststoff und/oder ein Metall ist, und/oder wobei die Form ein Balg, ein Trampolin und/oder ein Faltenbalg ist, welches dazu eingerichtet ist, die Volumenänderung der Elektroden-Separator/Elektrolyt-Einheit zu folgen.

Ein Vorteil dieser Ausführungsform ist, dass durch eine Anpassung des Materials und/oder einer Kontur bzw. Form der Verbindungseinheit eine Volumenänderung der Elektroden- Separator/Elektrolyt-Einheit gefolgt werden kann und sodass der benötigte Bauraum konstant gehalten werden kann. Bevorzugt kann bspw. ein erster Teil der Verbindungseinheit an dem ersten Begrenzungselement angeordnet sein und ein zweiter Teil der Verbindungseinheit an einem Gehäuse der Energiespeichereinheit. Ein weiterer Vorteil besteht darin, dass eine über die Fläche homogene Verpressung der Elektroden-Separator/Elektrolyt-Einheit gewährleistet werden kann. Bspw. betragen typische maximale bis zu 20%, bevorzugt maximal 10%.

Weiter bevorzugt ist die Verbindungseinheit dazu eingerichtet das erste Begrenzungselement mit einem Gehäuse der Energiespeichereinheit zu verbinden.

Ein Vorteil dieser Ausführungsform ist, dass die Verbindungseinheit an dem Gehäuse und an dem Begrenzungselement angeordnet werden kann, sodass anschließend die Elektroden-Separator/Elektrolyt-Einheit in die Energiespeichereinheit eingefügt werden kann. Durch eine solche Ausführung kann eine Zell-Produktion realisiert werden, die an eine Produktion von Prismatischen Zellen angelehnt ist. Die Elektroden-Separator/Elektrolyt-Einheit wird bevorzugt in das Zellgehäuse eingebracht und mit den Zellverbindern elektrisch verbunden. Anschließend wird vorzugsweise das Gehäuse verschweißt. Diese Ausführung des Zellgehäuses kann demnach vergleichsweise einfach in einer bestehenden Produktion von Prismatischen Zellen integriert werden.

Weiter bevorzugt weist die Elektroden-Separator/Elektrolyt-Einheit ein zweites Begrenzungselement auf, welches zumindest teilweise die Außenseite der Elektroden-Separator/Elektrolyt-Einheit ausbildet, wobei die Verbindungseinheit mit dem ersten Begrenzungselement und mit dem zweiten Begrenzungselement verbunden ist, um die Volumenänderung der Elektroden-Separator/Elektrolyt-Einheit zu folgen.

Ein Vorteil dieser Ausführungsform ist, dass die Volumenänderung der Elektroden-Separator/Elektrolyt-Einheit in zwei Dimensionen gefolgt werden kann, wie bspw. entlang einer Achse. Bspw. kann die Verbindungseinheit als eine Art Faltenbalg oder ähnliches ausgebildet sein, um somit das erste Begrenzungselement und das zweite Begrenzungselement miteinander zu verbinden, um somit die Volumenänderung der Elektroden-Separator/Elektrolyt-Einheit folgen zu können. Bevorzugt kann die Verbindungseinheit eine mechanische Kraft aufbringen, welche das Begrenzungselement auf die Elektroden-Separator/Elektrolyt-Einheit aufbringt. Das Begrenzungselement wird bevorzugt auf die Elektroden-Separator/Elektrolyt-Einheit gepresst.

Weiter bevorzugt weist die Energiespeichereinheit ferner eine Verspannungseinheit auf, welche dazu eingerichtet ist, eine vorbestimmte Kraft auf das erste Begrenzungselement aufzubringen.

Ein Vorteil dieser Ausführungsform ist, dass mittels der Verspannungseinheit eine Volumenänderung der Elektroden-Separator/Elektrolyt-Einheit gezielt gefolgt bzw. eingestellt, insbesondere entgegengewirkt werden kann. Bevorzugt kann die Verspannungseinheit dazu eingerichtet sein, eine Volumenänderung der Elektroden-Separator/Elektrolyt-Einheit zu folgen und/oder einen vorbestimmten Druck auf die Elektroden-Separator/Elektrolyt-Einheit herzustellen. Dabei kann die Verspannungseinheit an der Elektroden-Separator/Elektrolyt-Einheit anliegen, und somit eine Kraft auf zumindest einer Außenseite der Elektroden-Separator/Elektrolyt-Einheit aufzubringen. Dabei kann bspw. die Elektroden-Separator/Elektrolyt-Einheit eine Randschicht oder ähnliches aufweisen, auf welche die Verspannungseinheit die vorbestimmte Kraft aufbringen kann.

Weiter bevorzugt ist die Verspannungseinheit dazu eingerichtet, die vorbestimmte Kraft anzupassen, wobei die angepasste vorbestimmte Kraft dazu eingerichtet ist, eine Höhe der Elektroden-Separator/Elektrolyt-Einheit einzustellen.

Ein Vorteil dieser Ausführungsform ist, dass die vorbestimmte Kraft an einem Alterungszustand der Elektroden-Separator/Elektrolyt-Einheit gezielt angepasst werden kann. Bspw. weist die Elektroden-Separator/Elektrolyt-Einheit über ihren Betrieb eine unterschiedliche Volumenzone und/oder Abnahme auf, sodass durch die angepasste vorbestimmte Kraft, diese durch die Verspannungseinheit berücksichtigt werden kann.

Weiter bevorzugt ist die Verspannungseinheit dazu eingerichtet, die vorbestimmte Kraft im Wesentlichen gleichmäßig auf die Außenseite der Elektroden-Separator/Elektrolyt-Einheit aufzubringen.

Ein Vorteil dieser Ausführungsform ist, dass die mechanische oder hydraulische Kraft, welche durch die Verspannungseinheit ausgebildet werden kann, möglichst gleichmäßig über die gesamte Außenseite der Elektroden-Separator/Elektrolyt-Einheit verteilt werden kann. Bspw. weist die Elektroden-Separator/Elektrolyt-Einheit einen Deckel und/oder einen Boden auf, wobei die Verspannungseinheit dazu eingerichtet ist, die vorbestimmte Kraft im Wesentlichen vollständig auf dem Decken und/oder auf dem Boden aufzubringen. Im Wesentlichen vollständig kann in diesem Zusammenhang insbesondere bedeuten, dass eine Fläche von zumindest 80% der Außenseite der Elektroden-Separator/Elektrolyt-Einheit mit der Verspannungseinheit beaufschlagt wird, insbesondere fertigungsbedingte Toleranzen.

Weiter bevorzugt sind die Verbindungseinheit und die Verspannungseinheit dazu eingerichtet, einen vorbestimmten Druck in der Elektroden-Separator/Elektrolyt-Einheit einzustellen. Bevorzugt ist die Verspannungseinheit schaltbar, d.h. die Kraft ist variabel einstellbar. Hierbei kann z.B. beim Entladen der Zellen eine höhere Kraft eingestellt werden, so dass z.B. bei einer sich auflösenden Metallanode die Separator/Elektrolytschicht angepresst werden kann. Beim Laden kann die Kraft auf die Verspannungseinheit reduziert werden, so dass sich die Anoden gezielt aufbauen können und insbesondere Dendritenwachstum verhindert werden kann.

Ein Vorteil dieser Ausführungsform ist, dass ein synergetischer Effekt zwischen der Verbindungseinheit und der Verspannungseinheit entstehen kann, da das erste Begrenzungselement die notwendige Steifigkeit aufweist, um die vorbestimmte Kraft der Verspannungseinheit aufzunehmen und gleichmäßig zu verteilen und die Verbindungseinheit bevorzugt die Auslenkung zwischen dem steifen ersten Begrenzungselement und dem Gehäuse der Energiespeichereinheit folgen kann. Bspw. kann die Verbindungseinheit eine elastische Verformung bereitstellen, welche eine Ausdehn- bzw. Volumenverringerung der Elektroden-Separator/Elektrolyt-Einheit folgen kann. Die Verbindungseinheit kann damit auch gleichzeitig Funktionen der Verspannungseinheit zumindest teilweise übernehmen, wobei die Verbindungseinheit das Begrenzungselement auf die Elektroden-Separator/Elektrolyt-Einheit durch Zugkräfte verpresst, während die Verspannungseinheit das Begrenzungselement auf die Akkueinheit durch Druckkraft verpresst. Je nach mechanischer Anforderung kann die Verpressungsfunktion daher auch ausschließlich durch die Verbindungseinheit erfolgen, so dass eine zusätzliche Verspannungseinheit komplett entfallen kann.

Vorzugsweise sind die Verspannungseinheit und das erste Begrenzungselement einteilig ausgebildet.

Ein Vorteil dieser Ausführungsform ist, dass die Verspannungseinheit und das erste Begrenzungselement mittels eines Metallprofils oder ähnliches urgeformt werden können, um somit die Herstellkosten weiter reduzieren zu können. Weiter bevorzugt kann die Verspannungseinheit auch als eine Art Schaum oder ähnlichem, insbesondere Metallschäume ausgebildet sein, welche an dem ersten Begrenzungselement anheften und somit einteilig ausgebildet sind. Bevorzugt kann das Metallprofil elastische verformbar sein.

Vorzugsweise weist die Verspannungseinheit eine Federeinheit auf, wobei die Federeinheit dazu eingerichtet ist, die vorbestimmte Kraft mittels einer Formveränderung bereitzustellen.

Ein Vorteil dieser Ausführungsform ist, dass die Federeinheit insbesondere eine hohe Betriebsdauer aufweist, als auch besonderes wenig Bauraum benötigt. Dabei kann insbesondere die Federeinheit um eine an einer Außenseite der Elektroden-Separator/Elektrolyt-Einheit als auch an einer Referenz bzw. einem Aufstellpunkt anliegen, um somit die vorbestimmte Kraft ausbilden zu können.

Weiter bevorzugt weist die Federeinheit eine Tellerfeder und/oder eine Wellfeder, welche mittels der Formveränderung die vorbestimmte Kraft bereitstellt.

Ein Vorteil dieser Ausführungsform ist, dass sowohl Tellerfeder als auch Wellfeder eine hohe Verfügbarkeit als geringe Herstellkosten aufweisen, sodass die Gesamtkosten der Energiespeichereinheit weiter reduziert werden können.

Weiter bevorzugt weist das erste Begrenzungselement eine Vielzahl von Federelementen auf, welche auf dem ersten Begrenzungselement angeordnet sind, wobei die Vielzahl von Federelementen eine Wölbung hin zum ersten Begrenzungselement aufweisen, wobei ein Grad der Wölbung der Vielzahl von Federelementen dazu eingerichtet ist, die vorbestimmte Kraft bereitzustellen.

Ein Vorteil dieser Ausführungsform ist, dass die Vielzahl von Federelementen mit dem ersten Begrenzungselement einteilig ausgebildet sein können, um somit bspw. das erste Begrenzungselement und die Verspannungseinheit mittels eines Extrudierverfahrens bereitstellen zu können. Bevorzugt kann es sich bspw. um ein Aluminiumprofil handeln, welches zum einen eine flächige Ebene ausbildet, die das erste Begrenzungselement ausbildet und eine Vielzahl von Federelementen aufweist, welche die Federeinheit ausbilden kann. Weiter bevorzugt sind das erste Begrenzungselement und die Vielzahl von Federelementen einteilig urgeformt, sodass die Vielzahl von Federelementen an einem Profil des ersten Begrenzungselements ausgebildet ist.

Ein Vorteil dieser Ausführungsform ist, dass das erste Begrenzungselement mit der Vielzahl von Federelementen einfach und flexibel an unterschiedliche Längen von Elektroden-Separator/Elektrolyt-Einheiten angepasst werden kann, da durch ein endlos extrudiertes Profil dieses an die jeweilige Elektroden-Separator/Elektrolyt-Einheitlänge durch Ablängen des Profils angepasst werden kann.

Vorzugsweise weist die Verspannungseinheit eine Hydraulikeinheit auf, wobei die Hydraulikeinheit dazu eingerichtet ist, durch eine Verlagerung des Hydraulikelements die vorbestimmte Kraft freizustellen.

Ein Vorteil dieser Ausführungsform ist, dass die Hydraulikeinheit die Verlagerung des Hydraulikelements zur Ausbildung der vorbestimmten Kraft über die Betriebsdauer der Energiespeichereinheit anpassen kann, um so eventuell Alterungsdefekte folgen zu können.

Weiter bevorzugt ist die Verbindungseinheit dazu eingerichtet, einen Hohlraum zwischen dem ersten Begrenzungselement und der Verbindungseinheit auszubilden, wobei die Hydraulikeinheit dazu eingerichtet ist, den Hohlraum mit einem Fluid zu befüllen, um die vorbestimmte Kraft bereitzustellen.

Ein Vorteil dieser Ausführungsform ist, dass die Verbindungseinheit eine Art Schlauch, Kissen oder ähnliches in sich ausbilden kann, bspw. durch Überschlag und Versiegeln der

Folie, wobei die Hydraulikeinheit das Fluid in den Schlauch bzw. in den Hohlraum einleiten kann, um somit die Verspannungseinheit ausbilden zu können. Weiterhin vorteilhaft kann es hierbei sein, das Hydraulikmedium gleichzeitig als Kühlmedium der Zellen einzusetzen. Zu diesem Zweck kann das Hydraulikmedium durch die Verbindungseinheit strömen. Denkbar ist auch eine Verbindungseinheit, die durch ein Gas druckaktivierbar ist. Bei einer mediengefüllten Verspannungseinheit lässt sich bevorzugt leicht eine Schaltfunktion implementieren, d.h. die Kraft ist variabel einstellbar. Hierbei kann z.B. beim Entladen der Zellen durch Erhöhung des Innendrucks der Verbindungseinheit eine höhere Kraft eingestellt werden, so dass z.B. bei einer sich auflösenden Metallanode die Separator/Elektrolytschicht angepresst werden kann. Beim Laden kann der Innendruck reduziert und somit die Kraft auf die Verspannungseinheit reduziert werden, so dass sich die Anoden gezielt aufbauen können und insbesondere Dendritenwachstum verhindert werden kann.

Weiter bevorzugt weist die Elektroden-Separator/Elektrolyt-Einheit zumindest ein Formelement auf, wobei das Formelement dazu eingerichtet ist, seine Höhe anzupassen, wobei die Verspannungseinheit dazu eingerichtet ist, die Höhe des Formelements mittels der vorbestimmten Kraft zu verändern.

Ein Vorteil dieser Ausführungsform ist, dass das Formelement derart ausgestaltet werden kann, dass der Betrieb der Elektroden-Separator/Elektrolyt-Einheit auch bei unterschiedlichen Volumen aufrechterhalten werden kann. Bevorzugt kann das Formelement den Abstand zwischen den unterschiedlichen Schichten der Elektroden-Separator/Elektrolyt-Einheit bei unterschiedlichen Höhen der Elektroden-Separator/Elektrolyt-Einheit im Wesentlichen konstant halten. Dazu kann das Formelement insbesondere ein Mechanismus aufweisen, welcher dazu eingerichtet ist, ein Volumen der Elektroden-Separator/Elektrolyt-Einheit zu erhöhen, wenn die vorbestimmte Kraft in der Verspannungseinheit minimiert wird.

Vorzugweise weist das Formelement eine erste Schicht und eine zweite Schicht auf, wobei an der ersten Schicht zumindest ein Stegelement angeordnet ist, welches dazu eingerichtet ist, die erste Schicht von der zweiten Schicht zu beabstanden.

Ein Vorteil dieser Ausführungsform ist, dass mit dem Stegelement und den zwei Schichten, die beiden Schichten voneinander durch eine Aufstellkraft des Stegelements, voneinander beabstandet werden können.

Weiter bevorzugt ist das Stegelement hin zur ersten Schicht um ein Umlenkpunkt der ersten Schicht auslenkbar und/oder klappbar.

Ein Vorteil dieser Ausführungsform ist, dass wenn die Verspannungseinheit die Höhe bzw. das Volumen der Elektroden-Separator/Elektrolyt-Einheit mittels der vorbestimmten Kraft reduziert, sich die erste Schicht zu der zweiten Schicht annähert und dabei jedoch das Stegelement um den Umlenkpunkt klappt, sodass der Abstand zwischen der ersten Schicht und der zweiten Schicht geringer wird. Für den Fall, dass die Elektroden-Separator/Elektrolyt-Einheit ihr Volumen vergrößert, beginnt das Stegelement die erste Schicht von der zweiten Schicht zu beabstanden, insbesondere wenn die vorbestimmte Kraft der Verspannungseinheit reduziert bzw. minimiert.

Weiter bevorzugt weist das Formelement eine dritte Schicht auf, wobei die erste Schicht ein weiteres Stegelement aufweist, welches auf einer Seite abgewandt von dem Stegelement angeordnet ist, wobei das weitere Stegelement die dritte Schicht von der ersten Schicht beabstandet.

Ein Vorteil dieser Ausführungsform ist, dass die Montage der unterschiedlichen Schichten aufeinander vereinfacht werden kann. Mit anderen Worten kann die erste Schicht der ersten Seite ein erstes Stegelement und auf der zweiten Seite ein zweites bzw. ein weiteres Stegelement aufweisen, sodass sich die Stegelemente gegenüberliegen. Soweit kann auf der ersten Seite mittels des Stegelements die zweite Schicht von der ersten Schicht beabstandet werden und auf der zweiten Schicht die dritte Schicht mit dem weiteren Stegelement beabstandet werden.

Ein weiterer Aspekt der Erfindung betrifft ein Verfahren zur Herstellung einer Energiespeichereinheit wie voranstehend und nachfolgend beschrieben, aufweisend die Schritte:
- Bereitstellen eines Gehäuses für eine Elektroden-Separator/Elektrolyt-Einheit,
- Anordnen eines ersten Begrenzungselements mittels einer Verbindungseinheit an dem Gehäuse der Energiespeichereinheit,
- Einbringen der Elektroden-Separator/Elektrolyt-Einheit in die Energiespeichereinheit, sodass die Verbindungseinheit eine Volumenänderung der Elektroden-Separator/Elektrolyt-Einheit folgt.

Weiter bevorzugt weist das Verfahren ferner den Schritt auf:
- Anordnen eines Deckels an dem Gehäuse zum Ausbilden eines im Wesentlichen fluiddichten Raums um die Elektroden-Separator/Elektrolyt-Einheit in der Energiespeichereinheit.

Weiter bevorzugt weist das Verfahren ferner den Schritt auf:
- Kontaktieren der Elektroden-Separator/Elektrolyt-Einheit mit dem Deckel zum Ausbilden einer elektrischen Verbindung zwischen der Elektroden-Separator/Elektrolyt-Einheit und dem Deckel.

Weiter bevorzugt weist, der Deckel zumindest zwei Kontaktelemente auf, wobei mittels der elektrischen Verbindung die beiden Kontaktelemente mit Energie versorgt werden.

Weiter bevorzugt weist das Verfahren ferner den Schritt auf:
- Anordnen einer Verspannungseinheit an dem ersten Begrenzungselement, sodass die Verspannungseinheit eine vorbestimmte Kraft auf das erste Begrenzungselement ausbilden kann.

Ein weiterer Aspekt der Erfindung betrifft ein Fahrzeug, welches eine Energiespeichereinheit wie voranstehend und nachfolgend beschrieben aufweist.

Ein weiterer Aspekt der Erfindung betrifft ein Batteriespeichersystem für den stationären Einsatz zum Aufnehmen und Abgeben elektrischer Energie, aufweisend eine Vielzahl von Energiespeichereinheiten wie voranstehend und nachfolgend beschrieben.

Ferner ist darauf hinzuweisen, dass der Begriff der Einheit vorliegend breit zu verstehen ist und sowohl eine einteilige Ausbildung als auch eine mehrteilige Ausbildung der jeweiligen Einheiten umfasst, wobei die jeweiligen Teileinheiten nicht auf einer Position im Fahrzeug beschränkt sind, sondern auch verteilt im Fahrzeug vorgesehen sein können.

Sämtlichen Offenbarungen, welche voranstehend und nachfolgend in Bezug auf einem Aspekt der Erfindung beschrieben sind, gelten gleichermaßen für alle weiteren Aspekte der Erfindung.

Nachfolgend werden Ausführungsbeispiele der Erfindung unter Bezugnahme auf die begleitenden Zeichnungen beschrieben. In der Zeichnung ist:
- Fig. 1a bis 14: eine Energiespeichereinheit gemäß einer Ausführungsform,
- Fig. 15: ein Flussdiagramm zur Illustration von Schritten des Verfahrens zur Herstellung einer Energiespeichereinheit gemäß einer Ausführungsform,
- Fig. 16: zeigt ein Fahrzeug 200 gemäß einer Ausführungsform,
- Fig. 17: zeigt ein Batteriespeichersystem 300 gemäß einer Ausführungsform.

### Ausführungsformen der Erfindung

Die Figuren sind lediglich schematisch und nicht maßstabsgetreu. In den Figuren können gleiche, gleichen wirkende oder ähnliche Elemente mit gleichen Bezugszeichen versehen sein.

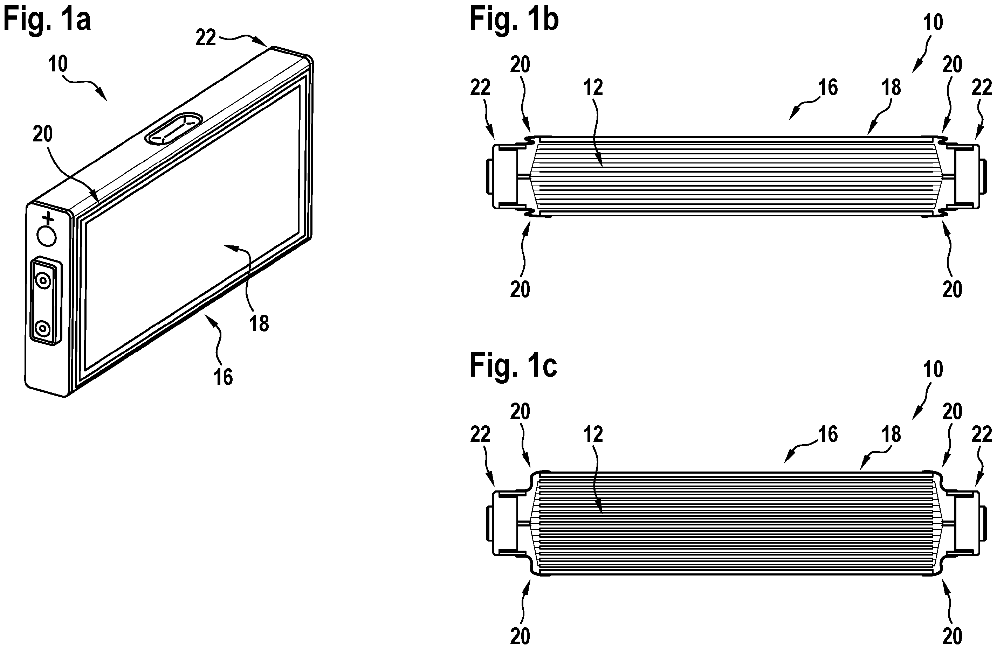

Fig. 1a zeigt eine Energiespeichereinheit 10 gemäß einer Ausführungsform. Die Energiespeichereinheit 10 weist eine Elektroden-Separator/Elektrolyt-Einheit 12 auf, wobei die Elektroden-Separator/Elektrolyt-Einheit 12 dazu eingerichtet ist, elektrische Energie aufzunehmen und/oder abzugeben, wobei die Elektroden-Separator/Elektrolyt-Einheit 12 zumindest ein erstes Begrenzungselement 18 aufweist, wobei das erste Begrenzungselement zumindest teilweise eine Außenseite 16 in der Elektroden-Separator/Elektrolyt-Einheit 12 ausbildet, wobei die Energiespeichereinheit 10 eine Verbindungseinheit 20 aufweist, wobei die Verbindungseinheit 20 an dem ersten Begrenzungselement 18 angeordnet ist, wobei die Verbindungseinheit 20 dazu eingerichtet ist, eine Volumenänderung der Elektroden-Separator/Elektrolyt-Einheit 12 zu folgen. Bevorzugt kann das Gehäuse 22 aus einem Rahmen angefertigt werden. Die Form des Gehäuses 22 bzw. des Rahmens entspricht vorzugsweise der einer Elektroden-Separator/Elektrolyt-Einheit 12.

Bevorzugt kann das Gehäuse 22 ein Zellgehäuse sein, welches aus einem Rahmen oder ähnlichem gefertigt bzw. aufgebaut ist. Die Form des Rahmens bzw. des Zellgehäuses entspricht dabei dem Gehäuse 22 der Elektroden-Separator/Elektrolyt-Einheit 12. Bevorzugt kann der Rahmen aus Metall vorzugsweise Aluminium und/oder für mechanisch hohe beanspruchte Zellen aus nickelbeschichtetem Stahl bestehen. Weiter bevorzugt kann der Rahmen auch aus einem Kunststoff wie bspw. PPS hergestellt sein. Bevorzugt weist das Gehäuse 22 bzw. der Rahmen seitliche Öffnungen auf, an welche die Verbindungseinheit 20 angeordnet werden kann. Weiter bevorzugt kann durch eine Öffnung an einer Seitenfläche des Rahmens die Elektroden-Separator/Elektrolyt-Einheit 12 eingeschoben werden und anschließend mit einer Deckelbraugruppe verschlossen bzw. verschweißt werden.

Weiter bevorzugt kann die Verbindungseinheit 20 insbesondere aus einer Art Folie ausgebildet werden, welche mittels eines Elastomers oder ähnlichem hergestellt sein kann. Dabei kann bspw. ein Elastomer auf Basis von EPDM genutzt werden, insbesondere im Zusammenhang mit flüssigen Elektrolyten in der Elektroden-Separator/Elektrolyt-Einheit 12. Weiter bevorzugt können bei Feststoff Elektroden-Separator/Elektrolyt-Einheiten 12 auch Elastomere zum Einsatz kommen.

Weiter bevorzugt kann die Elektroden-Separator/Elektrolyt-Einheit 12 mit den Elektrodenseparator-Stacks durch Ladevorgänge sich ausdehnen und somit die Verbindungseinheit 20 bzw. die Folie nach außen auslenken. Dabei kann insbesondere die Verbindungseinheit 20 bei der Dickenabnahme während eines Entladevorgangs der Elektroden-Separator/Elektrolyt-Einheit 12 der Volumenänderung folgen. Durch die Verwendung eines elastomeren Materials in der Verbindungseinheit 20, kann sichergestellt werden, dass die Elektroden-Separator/Elektrolyt-Einheit 12 im Wesentlichen jederzeit mechanischen Kontakt zur Verbindungseinheit 20 bzw. dem Begrenzungselement 18 aufweist. Weiter bevorzugt kann die Elastizität der Verbindungseinheit 20 dazu beitragen, eine definierte mechanische Kraft auf die Elektroden-Separator/Elektrolyt-Einheit 12 aufzubringen. Ferner kann die Verbindungseinheit 20 insbesondere der Elastizität dazu beitragen, die Dickenabnahme der Elektroden-Separator/Elektrolyt-Einheit 12 zu unterstützen.

Fig. 1b zeigt die Energiespeichereinheit 10 gemäß der Fig. 1a in einer Schnittansicht. Bevorzugt kann die Verbindungseinheit 20 an dem ersten Begrenzungselement 18 als auch an einem Gehäuse 22 der Energiespeichereinheit 10 angeordnet sein. In der Fig. 1b wird die Energiespeichereinheit 10 in einem endlandenden Zustand dargestellt.

In Fig. 1c wird die Energiespeichereinheit der Figuren 1a und 1b in einem geladenen Zustand dargestellt. Wie durch den Vergleich der Figuren 1b und 1c zu erkennen ist, erhöht sich das Volumen der Elektroden-Separator/Elektrolyt-Einheit 12 im geladenen Zustand. Dabei kann die Verbindungseinheit durch eine elastische Deformation das erhöhte Volumen folgen.

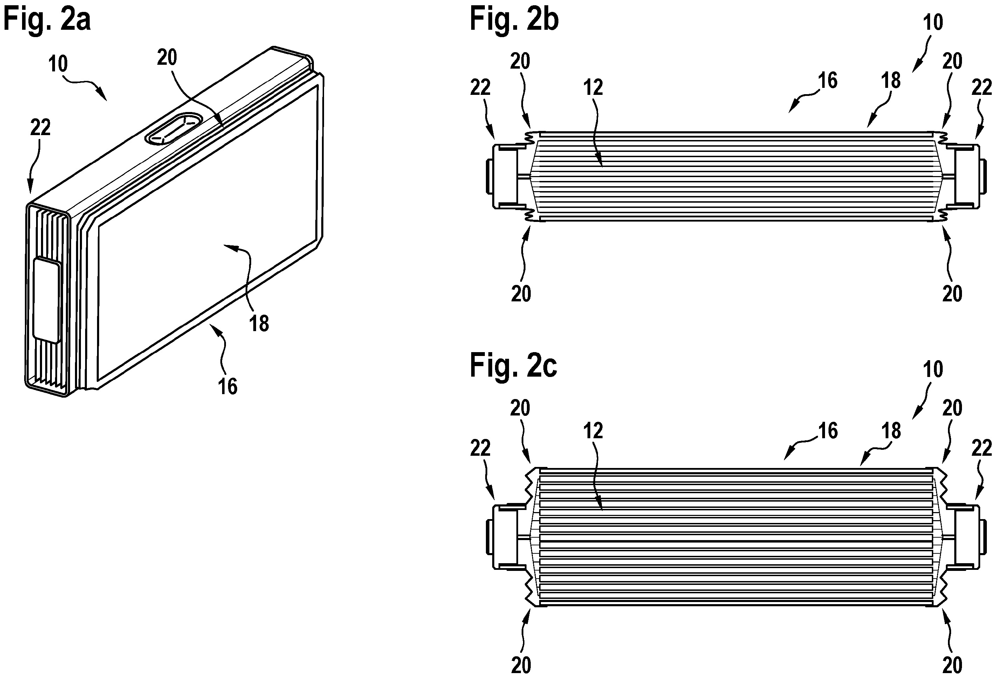

Fig. 2a zeigt die Energiespeichereinheit 10 gemäß einer Ausführungsform. Die Energiespeichereinheit 10 weist dabei eine Verbindungseinheit 20 auf, welche eine Kontur mit einer Art von Faltenbalg aufweist, um somit das erste Begrenzungselement 18 zum Gehäuse 22 auslenken zu können, um insbesondere die Volumenänderung der Elektroden-Separator/Elektrolyt-Einheit 12 folgen zu können.

Weiter bevorzugt kann die Energiespeichereinheit 10 einem Rahmen mit seitlich angebrachten flexiblen Abdeckelementen bzw. Verbindungseinheiten 20 umfassen. Die Abdeckelemente bestehen vorzugsweise aus einem festen Seitenteil und einem flexiblen Deformierungselement. Das Abdeckelement bzw. Verbindungseinheiten 20 schützt bevorzugt den Elektroden-Separator-Stack vor mechanischer Beschädigung und verteilt von außen aufgebrachte mechanische Kräfte homogen über die Fläche. Das Abdeckelement bzw. Verbindungseinheiten 20 kann aus Metall, Kunststoff oder auch einem stärkeren Elastomer bestehen. Im Fall von Metallen kann dieses zumindest auf der Innenseite der bzw. Verbindungseinheiten 20 elektrisch isolierend ausgestaltet sein.

Das flexible Deformationselement bzw. bzw. Verbindungseinheit 20 kann Elastomere umfassen. Hierbei erfolgt bevorzugt seine Deformation über die Elastizität des Materials. Das flexible Deformationselement kann aus Metallen oder Elastomeren bestehen. Seine Deformation kann hierbei durch die Formänderung bzw. seine Formänderung und die Elastizität des Materials erfolgen. Das flexible Deformationselement kann dazu beitragen, eine definierte mechanische Kraft auf den Elektroden-Separator-Stack aufzubringen. Das flexible Deformationselement kann dazu beitragen, die Dickenabnahme des Elektroden-Separator-Stacks aktiv zu unterstützen.

Fig. 2b zeigt eine Schnittansicht der Energiespeichereinheit der Fig. 2a. Wie in der Fig. 2b zu sehen ist, weist die Verbindungseinheit 20 einen im Wesentlichen balgähnlichen bzw. faltenbalgähnlichen Aufbau auf. In der Fig. 2b ist die Energiespeichereinheit 10 bzw. die Elektroden-Separator/Elektrolyt-Einheit 12 in einem entladenen Zustand gezeigt.

Fig. 2c zeigt die Energiespeichereinheit 10 der Figuren 2a und 2b. Wie in der Fig. 2c zu erkennen ist, ist die Verbindungseinheit 20 mittels des Faltenbalgs ausgelenkt, insbesondere zum Gehäuse 22, sodass eine Volumenänderung der Elektroden-Separator/Elektrolyt-Einheit 12 gefolgt werden kann.

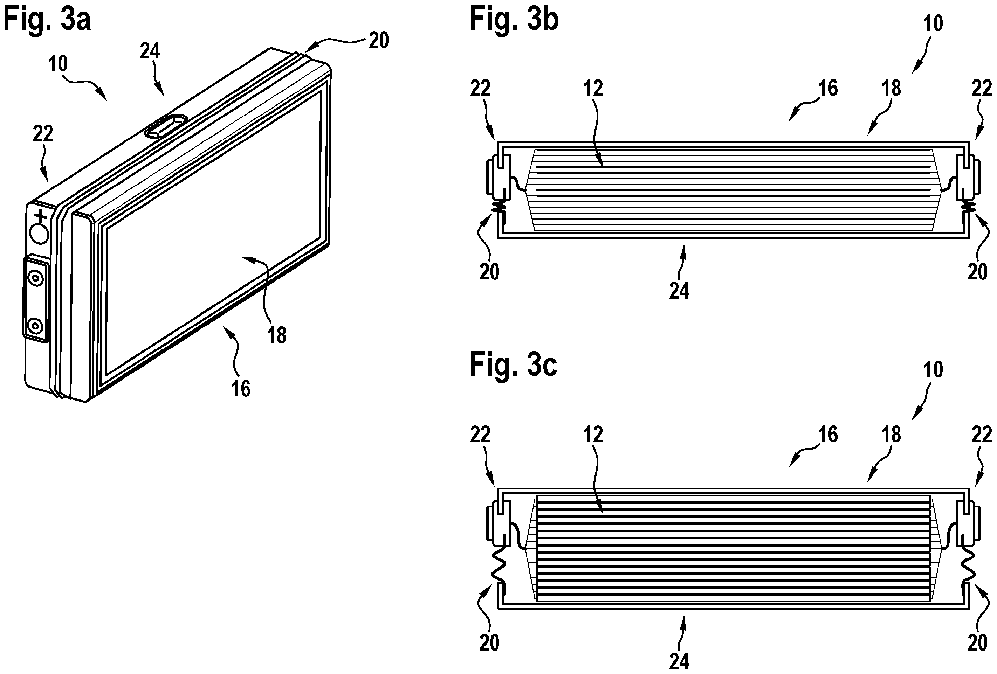

Fig. 3a zeigt eine Ausführungsform der Energiespeichereinheit 10. Die Energiespeichereinheit 10 weist ein erstes Begrenzungselement 18 und ein zweites Begrenzungselement 24 auf. Die Verbindungseinheit 20 kann dabei insbesondere zwischen dem ersten Begrenzungselement 18 und dem zweiten Begrenzungselement 24 angeordnet sein. Weiter bevorzugt kann das erste Begrenzungselement 18 und/oder das zweite Begrenzungselement 24 an einem Gehäuse 22 der Energiespeichereinheit 10 angeordnet sein. Weiter bevorzugt kann die Verbindungseinheit 20 das erste Begrenzungselement 18 und/oder das zweite Begrenzungselement 24 an dem Gehäuse 22 anordnen. Bevorzugt umfasst das Gehäuse 22 zwei prismatischen Halbschalen, welche durch ein flexibles Deformationselement bzw. Verbindungseinheit 20 miteinander verbunden sind. Die Halbschalen schützen vorzugsweise den Elektroden-Separator-Stack bzw. Elektroden-Separator/Elektrolyt-Einheit 12 vor mechanischer Beschädigung und verteilen von außen aufgebrachte mechanische Kräfte homogen über die Fläche. Das Gehäuse kann bevorzugt Metalle, Kunststoffe und/oder auch einem stärkeren Elastomer umfassen. In einer der Halbschalen können die elektrischen Anschlüsse integriert werden. Das flexible Deformationselement bzw. Verbindungseinheit 20 kann dazu beitragen, eine definierte mechanische Kraft auf den Elektroden-Separator-Stack aufzubringen. Das flexible Deformationselement kann dazu beitragen, die Dickenabnahme des Elektroden-Separator-Stacks aktiv zu unterstützen.

Fig. 3b zeigt eine Schnittansicht der Energiespeichereinheit 10 der Fig. 3a. Die Energiespeichereinheit 10 wird in der Fig. 3b in einem entladenen Zustand dargestellt, sodass das erste Begrenzungselement 18 und das zweite Begrenzungselement 24 eine minimale Auslenkung aufweisen.

Fig. 3c zeigt die Energiespeichereinheit 10 der Figuren 3a und 3b in einem geladenen Zustand. Wie in der Fig. 3c gezeigt ist, kann aufgrund der Ausdehnung der Elektroden-Separator/Elektrolyt-Einheit 12 das zweite Begrenzungselement 24 zum Gehäuse 22 ausgelenkt werden, wobei die Verbindungseinheit 20 mittels des Faltenbalgs oder ähnliches die Auslenkung folgen kann.

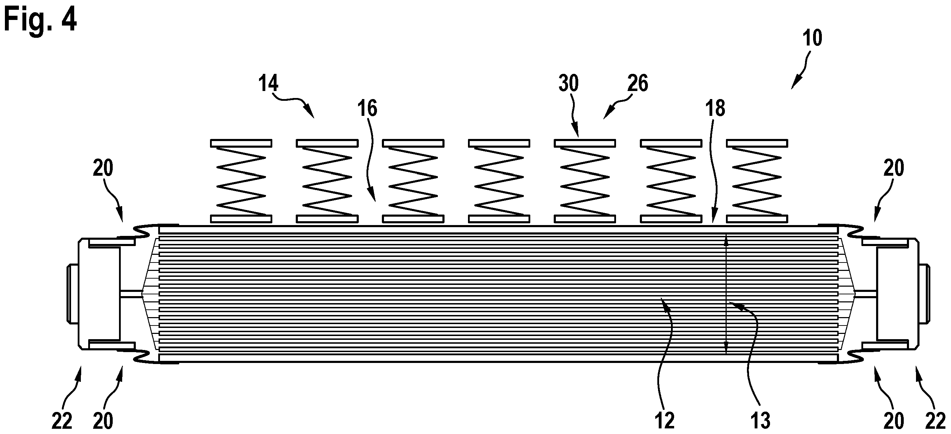

Fig. 4 zeigt eine Energiespeichereinheit 10 gemäß einer Ausführungsform. Die Energiespeichereinheit 10 weist bevorzugt ein Gehäuse 22 auf, an welchem mittels der Verbindungseinheit 20 das erste Begrenzungselement 18 angeordnet ist. An dem ersten Begrenzungselement 18 ist bevorzugt eine Verspannungseinheit 14 angeordnet, wobei die Verspannungseinheit 14 dazu eingerichtet ist, eine vorbestimmte Kraft auf das erste Begrenzungselement 18 aufzubringen. Dabei kann insbesondere die Verspannungseinheit 14 dazu eingerichtet sein, die vorbestimmte Kraft anzupassen, wobei die angepasste vorbestimmte Kraft dazu eingerichtet ist, eine Höhe 13 der Elektroden-Separator/Elektrolyt-Einheit 12 einzustellen. Weiter bevorzugt sind die Verbindungseinheit 20 und die Verspannungseinheit 14 dazu eingerichtet, einen vorbestimmten Druck in der Elektroden-Separator/Elektrolyt-Einheit 12 einzustellen. Weiter bevorzugt kann die Verspannungseinheit 14 auch als eine Art Schaum ausgebildet sein, welcher an das erste Begrenzungselement 18 angespritzt wird, insbesondere Metallschäume oder ähnliches. Dabei ist bevorzugt die Verspannungseinheit fest mit dem Abdeckelement und damit mit dem Gehäuse 22 verbunden. In Figur 4 schematisch dargestellt können Federelemente, die in mehrfacher Ausführung über die Energiespeichereinheit 10 verteilt werden. Bevorzugt können mittels der Federcharacteristika der Verspannungseinheit 14 Kräfte und Federwege eingestellt werden.

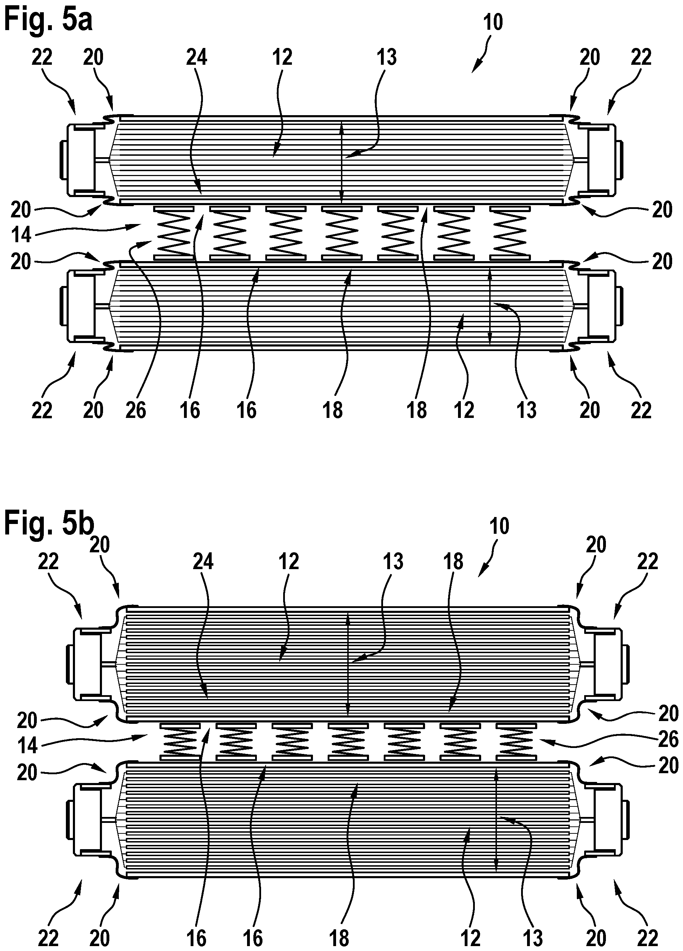

Fig. 5a zeigt eine Energiespeichereinheit 10 gemäß einer Ausführungsform. Wie in der Fig. 5a zu erkennen ist, sind zwei Energiespeichereinheiten 10 aneinander liegend angeordnet. Weiter bevorzugt teilen sich die beiden Energiespeichereinheiten 10 eine Verspannungseinheit 14. Bspw. kann die Verspannungseinheit 14 an einem ersten Begrenzungselement 18 der ersten Energiespeichereinheit 10 anliegen und an dem zweiten Begrenzungselement 24 der zweiten Energiespeichereinheit 10. Dabei werden die Energiespeichereinheiten 10 in der Fig. 5a in einem entladenen Zustand gezeigt.

Fig. 5 b zeigt die Energiespeichereinheiten 10 der Fig. 5a in einem geladenen Zustand. Wie in der Fig. 5b zu sehen ist, reduziert sich eine Erstreckungslänge der Verspannungseinheit 14, da sich die Elektroden-Separator/Elektrolyt-Einheiten 12 der Energiespeichereinheiten 10 ausdehnen. Bevorzugt kann die Ausdehnung ebenso über die Verbindungseinheit 20 zwischen dem Gehäuse 22 und dem ersten Begrenzungselement 18 bzw. dem zweiten Begrenzungselement 24 kompensiert bzw. gefolgt werden.

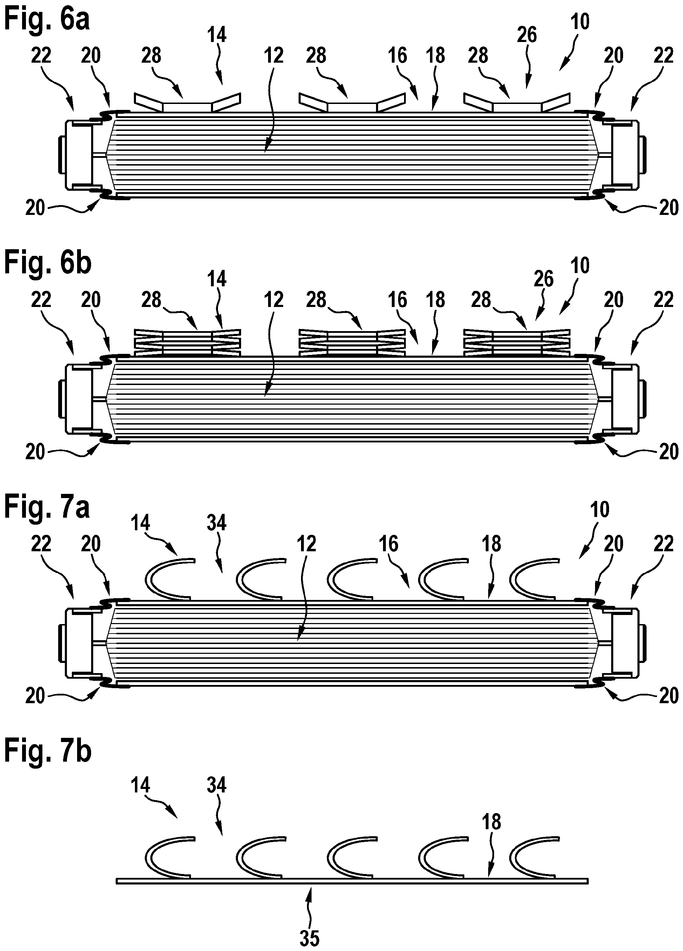

Fig. 6a zeigt eine Ausführungsform der Energiespeichereinheit 10. Die Energiespeichereinheit 10 weist dabei ein erstes Begrenzungselement 18 auf, an welchem die Verspannungseinheit 14 angeordnet ist. Ferner umfasst die Verspannungseinheit 14 eine Federeinheit 26. Wie in der Fig. 6a dargestellt ist, wird die Federeinheit 26 mittels Tellerfeder 28 ausgebildet.

Fig. 6b zeigt eine Ausführungsform der Energiespeichereinheit 10. Die Energiespeichereinheit 20 weist dabei ein erstes Begrenzungselement 18 auf, an welchem eine Verspannungseinheit 14 angeordnet ist. Die Verspannungseinheit 14 umfasst eine Federeinheit 26, welche zumindest ein Wellfeder 30 umfasst.

Fig. 7a zeig eine Ausführungsform der Energiespeichereinheit 10. Die Energiespeichereinheit 10 umfasst eine Verspannungseinheit 14, welche durch eine Vielzahl von Federelementen 34 ausgebildet wird, die auf dem ersten Begrenzungselement 18 angeordnet sind. Dabei kann die Vielzahl von Federelementen 34 und das erste Begrenzungselement 18 insbesondere einteilig urgeformt sein. Weiter bevorzugt kann insbesondere mittels einer Wölbung der Vielzahl von Federelementen 34 die vorbestimmte Kraft der Verspannungseinheit 14 bereitgestellt werden.

Fig. 7b zeigt die Energiespeichereinheit 10 gemäß einer Ausführungsform. Wie in der Fig. 7b dargestellt ist, sind das erste Begrenzungselement 18 und die Vielzahl von Federelementen 34 einteilig urgeformt, sodass die Vielzahl von Federelementen 34 an einem Profil 35 des ersten Begrenzungselements 18 ausgebildet ist.

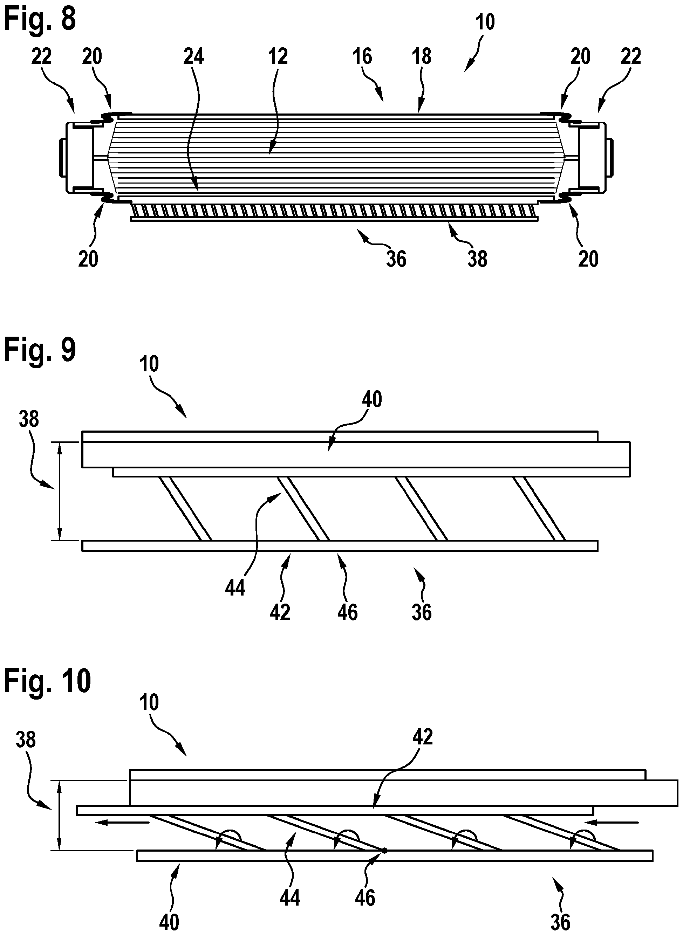

Fig. 8 zeigt eine Ausführungsform der Energiespeichereinheit 10. Die Energiespeichereinheit 10 umfasst ein Formelement 36, welches am ersten Begrenzungselement 18 und/oder am zweiten Begrenzungselement 25 ausgebildet sein kann. Weiter bevorzugt kann das Formelement 36 dazu eingerichtet sein, seine Höhe 38 anzupassen, insbesondere mittels der vorbestimmten Kraft. Weiter bevorzugt kann das Formelement dazu eingerichtet sein, eine Kraft auf die Elektroden-Separator/Elektrolyt-Einheit 12 auszubilden. Bevorzugt kann das Formelement 36 als Verspannungseinheit 14 fungieren. Weiter bevorzugt sind die Verpressungselemente bzw. Formelemente 36 fest mit dem Zellgehäuse bzw. dem ersten Begrenzungselement 18 verbunden. Bspw. kann das Formelement 36 als extrudiertes Aluminium-Profile ausgestaltet sein. Weiter bevorzugt kann das Formelement 36 das erste

Begrenzungselement 18 zumindest teilweise ausbilden. Vorteilhafter weise können die Formelemente 36 als Profile kostengünstig hergestellt werden.

Fig. 9 zeigt eine Ausführungsform der Energiespeichereinheit 10. Die Energiespeichereinheit 10 umfasst zumindest ein Formelement 36, welches dazu eingerichtet ist, seine Höhe 38 anzupassen. Weiter bevorzugt weist das Formelement 36 eine erste Schicht 40 und eine zweite Schicht 42 auf. Ferner ist an der ersten Schicht 40 zumindest ein Stegelement 44 angeordnet, welches dazu eingerichtet ist, die erste Schicht 40 von der zweiten Schicht 42 zu beabstanden. Vorzugsweise ist das Stegelement 44 zur ersten Schicht 40 um ein Umlenkpunkt 46 an der ersten Schicht 40 auslenkbar und/oder klappbar.

Fig. 10 zeigt eine Ausführungsform der Energiespeichereinheit 10. Die Energiespeichereinheit 10 umfasst ein Formelement 36. Bevorzugt kann das Formelement 36 durch das Umklappen des Stegelements 24 sein Höhen 38 anpassen.

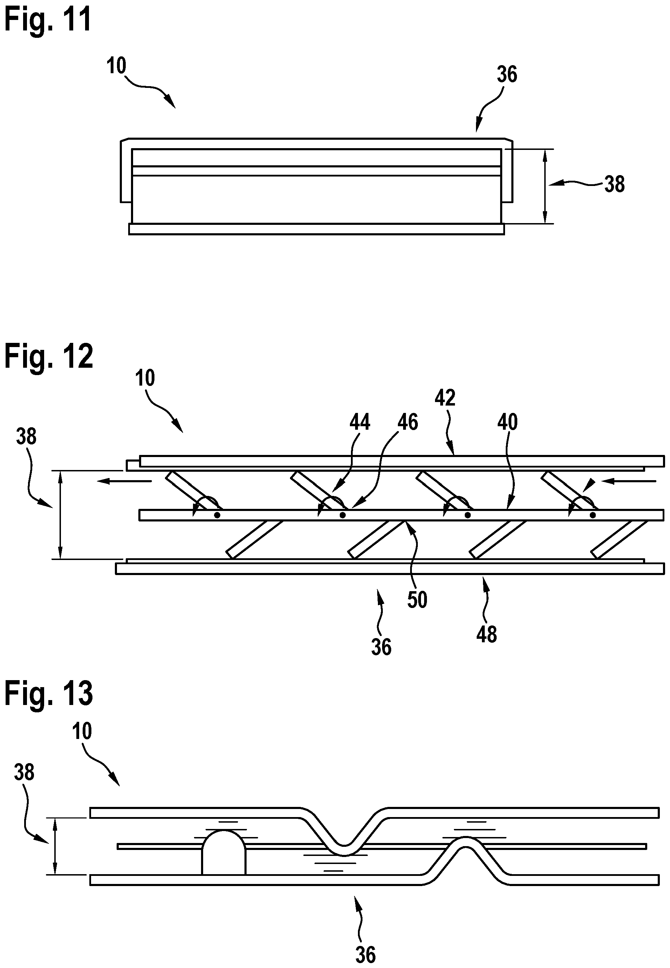

Fig. 11 zeigte eine Ausführungsform der Energiespeichereinheit 10. Die Energiespeichereinheit 10 umfasst ein Formelement 36, welches dazu eingerichtet ist, seine Höhe 38 anzupassen.

Fig. 12 zeigte eine Energiespeichereinheit 10 gemäß einer Ausführungsform. Die Energiespeichereinheit 10 umfasst bevorzugt ein Formelement 36. Das Formelement 36 weist bevorzugt eine erste Schicht 40, eine zweite Schicht 42 sowie eine dritte Schicht 48 auf. bevorzugt umfasst das Formelement 36 ein Stegelement 44 sowie ein weiteres Stegelement 50. Dabei kann insbesondere das Stegelement 44 an einer ersten Seite der ersten Schicht 40 angeordnet sein und das weitere Stegelement 50 an einer zweiten Seite der ersten Schicht 40 angeordnet sein. Somit kann insbesondere das weitere Stegelement 50 auf einer Seite angeordnet sein, welche abgewandt von dem Stegelement 44 ist. Weiter bevorzugt ist das erste Stegelement 44 dazu eingerichtet, die zweite Schicht 42 von der ersten Schicht 40 zu beabstanden. Vorzugsweise ist das weitere Stegelement 50 dazu eingerichtet, die dritte Schicht 48 von der ersten Schicht 40 zu beabstanden.

Fig. 13 zeigt eine Ausführungsform der Energiespeichereinheit 10. Die Energiespeichereinheit 10 kann ein Formelement 36 umfassen, welches dazu eingerichtet ist, seine Höhe 38 anzupassen. Wie in der Fig. 13 gezeigt ist, kann die Kontur des Formelements 36 dazu eingerichtet sein, die Höhe anzupassen wie bspw. durch Ausbuchtungen, Ausnehmungen oder ähnlichem.

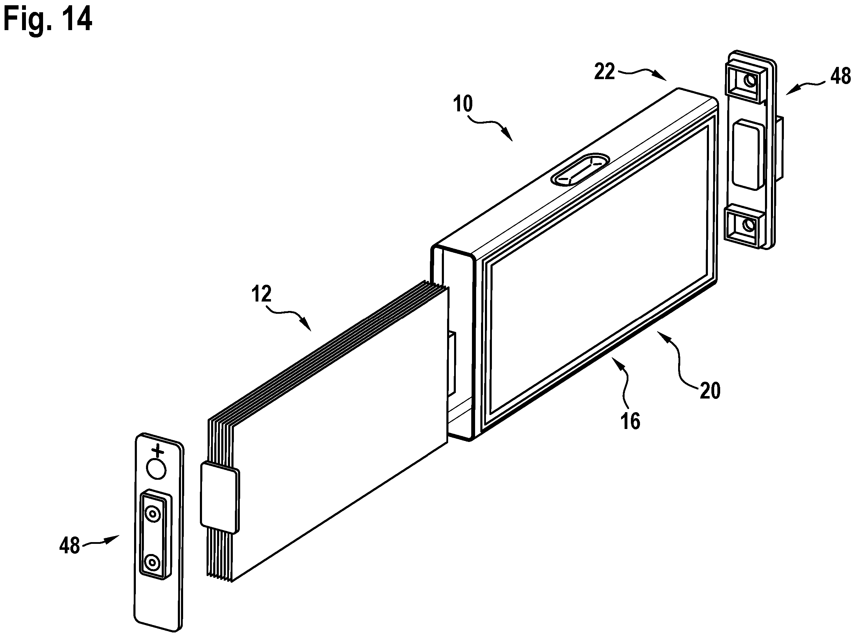

Fig. 14 zeigt eine Ausführungsform der Energiespeichereinheit 10. Bevorzugt kann eine Elektroden-Separator/Elektrolyt-Einheit 12 der Energiespeichereinheit 10 in ein Gehäuse 22 eingebracht werden. Dabei kann an dem Gehäuse 22 insbesondere eine Verbindungseinheit 20 angeordnet werden. Weiter bevorzugt kann, wenn Elektroden-Separator/Elektrolyt-Einheit 12 in dem Gehäuse 22 zwischen den Verbindungseinheiten 20 angeordnet ist, das Gehäuse 22 mit einem Deckel 50 verschlossen werden.

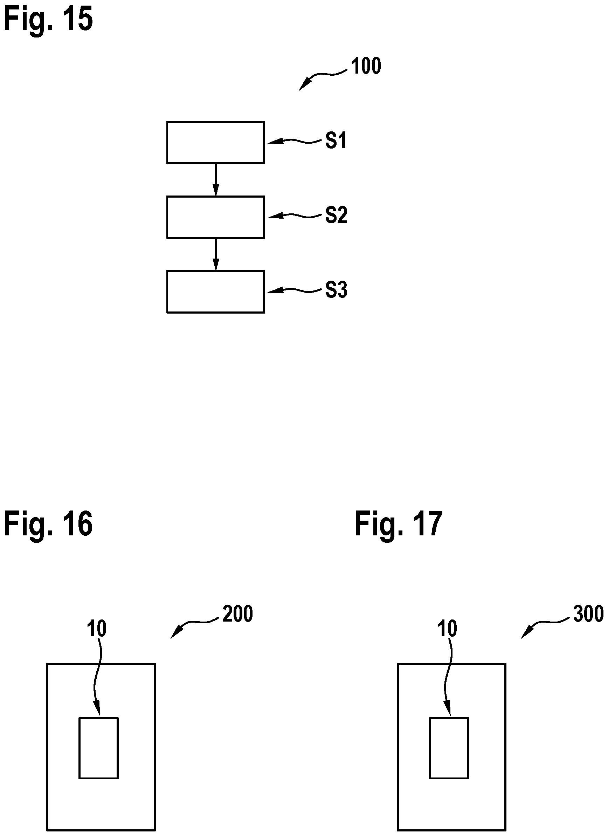

Fig. 15 zeigt ein Flussdiagramm zur Illustration von Schritten des Verfahrens 100 gemäß einer Ausführungsform. Das Verfahren 100 zur Herstellung einer Energiespeichereinheit 10, wie voranstehend und nachfolgend beschrieben, weist die Schritte auf:
- Bereitstellen S1 eines Gehäuses 22 für eine Elektroden-Separator/Elektrolyt-Einheit 12,
- Anordnen S2 eines ersten Begrenzungselements 18 mittels einer Verbindungseinheit 20 an dem Gehäuse 22 der Energiespeichereinheit 10,
- Einbringen S3 der Elektroden-Separator/Elektrolyt-Einheit 12 in die Energiespeichereinheit 10, sodass die Verbindungseinheit 20 einer Volumenänderung der Elektroden-Separator/Elektrolyt-Einheit 12 folgt.

Weiter bevorzugt weist das Verfahren 100 den Schritt Anordnen S4 eines Deckels an dem Gehäuse 22 zum Ausbilden eines im Wesentlichen fluiddichten Raums um die Elektroden-Separator/Elektrolyt-Einheit 12 in der Energiespeichereinheit 10 auf.

Fig. 16 zeigt ein Fahrzeug 200 gemäß einer Ausführungsform. Das Fahrzeug 200 weist bevorzugt eine Energiespeichereinheit 10 auf, wie die voranstehend und nachfolgend beschrieben wurde.

Fig. 17 zeigt ein Batteriespeichersystem 300 gemäß einer Ausführungsform. Das Batteriespeichersystem 300 für den stationären Einsatz zum Aufnehmen und Abgeben elektrischer Energie weist bevorzugt eine Vielzahl von Energiespeichereinheiten 10 wie voranstehend und nachfolgend beschrieben auf.

## Patentansprüche

1. Energiespeichereinheit (10) aufweisend:
- eine Elektroden-Separator/Elektrolyt-Einheit (12), wobei die Elektroden-Separator/Elektrolyt-Einheit (12) dazu eingerichtet ist, elektrische Energie aufzunehmen und/oder abzugeben,
wobei die Elektroden-Separator/Elektrolyt-Einheit (12) zumindest ein erstes Begrenzungselement (18) aufweist, wobei das erste Begrenzungselement (18) zumindest teilweise eine Außenseite (16) der Elektroden-Separator/Elektrolyt-Einheit (12) ausbildet, wobei die Energiespeichereinheit (10) eine Verbindungseinheit (20) aufweist, wobei die Verbindungseinheit (20) an dem ersten Begrenzungselement (18) angeordnet ist, wobei die Verbindungseinheit (20) dazu eingerichtet ist, eine Volumenänderung der Elektroden-Separator/Elektrolyt-Einheit (12) zu folgen.

2. Energiespeichereinheit (10) nach Anspruch 1, wobei die Verbindungseinheit (20) zumindest ein Material und/oder eine Form aufweist, welche dazu eingerichtet sind, die Volumenänderung der Elektroden-Separator/Elektrolyt-Einheit (12) zu folgen, wobei das Material ein Elastomer, ein Kunststoff und/oder ein Metall ist, und/oder wobei die Form ein Balg, ein Trampolin und/oder ein Faltenbalg ist, welche dazu eingerichtet ist, die Volumenänderung der Elektroden-Separator/Elektrolyt-Einheit (12) zu folgen.

3. Energiespeichereinheit (10) nach einem der vorherigen Ansprüche, wobei die Verbindungseinheit (20) dazu eingerichtet ist, das erste Begrenzungselement (18) mit einem Gehäuse (22) der Energiespeichereinheit (10) zu verbinden.

4. Energiespeichereinheit (10) nach einem der vorherigen Ansprüche, wobei die Elektroden-Separator/Elektrolyt-Einheit (12) ein zweites Begrenzungselement (24) aufweist, welches zumindest teilweise die Außenseite (16) der Elektroden-Separator/Elektrolyt-Einheit (12) ausbildet, wobei die Verbindungseinheit (20) mit dem ersten Begrenzungselement (18) und dem zweiten Begrenzungselement (24) verbunden ist, um die Volumenänderung der Elektroden-Separator/Elektrolyt-Einheit (12) zu folgen.

5. Energiespeichereinheit (10) nach einem der vorherigen Ansprüche, wobei die Energiespeichereinheit (10) ferner eine Verspannungseinheit (14) aufweist, welche dazu eingerichtet ist, eine vorbestimmte Kraft auf das erste Begrenzungselement (18) aufzubringen.

6. Energiespeichereinheit (10) nach Anspruch 5, wobei die Verbindungseinheit (20) dazu eingerichtet ist, eine Ziehkraft auf die Elektroden-Separator/Elektrolyt-Einheit (12) auszubilden, wobei die Verspannungseinheit (14) dazu eingerichtet ist, eine Druckkraft auf die die Elektroden-Separator/Elektrolyt-Einheit (12) auszubilden

7. Energiespeichereinheit (10) nach Anspruch 6, wobei die Verspannungseinheit (14) dazu eingerichtet ist, die vorbestimmte Kraft anzupassen, wobei die angepasste vorbestimmte Kraft dazu eingerichtet ist, eine Höhe (13) der Elektroden-Separator/Elektrolyt-Einheit (12) einzustellen.

8. Energiespeichereinheit (10) nach einem der Ansprüche 5 bis 7, wobei die Verspannungseinheit (14) dazu eingerichtet ist, die vorbestimmte Kraft im Wesentlichen gleichmäßig auf die Außenseite (16) der Elektroden-Separator/Elektrolyt-Einheit (12) aufzubringen.

9. Energiespeichereinheit (10) nach einem der Ansprüche 5 bis 8, wobei die Verbindungseinheit (20) und die Verspannungseinheit (14) dazu eingerichtet sind, einen vorbestimmten Druck in der Elektroden-Separator/Elektrolyt-Einheit (12) einzustellen.

10. Energiespeichereinheit (10) nach einem der Ansprüche 5 bis 9, wobei die Verspannungseinheit (14) und das erste Begrenzungselement (18) einteilig ausgebildet sind.

11. Energiespeichereinheit (10) nach einem der Ansprüche 5 bis 10, wobei die Verspannungseinheit (14) eine Federeinheit (26) aufweist, wobei die Federeinheit (26) dazu eingerichtet ist, die vorbestimmte Kraft mittels einer Formveränderung bereitzustellen.

12. Energiespeichereinheit (10) nach einem der Ansprüche 5 bis 11, wobei das erste Begrenzungselement (18) eine Vielzahl von Federelementen (34) aufweist, welche auf dem ersten Begrenzungselement (18) angeordnet sind, wobei die Vielzahl von Federelementen (34) eine Wölbung hin zum ersten Begrenzungselement (18) aufweist, wobei ein Grad der Wölbung der Vielzahl von Federelementen (34) dazu eingerichtet ist, die vorbestimmte Kraft bereitzustellen.

13. Energiespeichereinheit (10) nach Anspruch 12, wobei das erste Begrenzungselement (18) und die Vielzahl von Federelementen (34) einteilig urgeformt sind, sodass die Vielzahl von Federelementen (34) an einem Profil (35) des ersten Begrenzungselements (18) ausgebildet ist.

14. Energiespeichereinheit (10) nach einem der Ansprüche 5 bis 13, wobei die Verspannungseinheit (14) eine Hydraulikeinheit aufweist, wobei die Hydraulikeinheit dazu eingerichtet ist durch eine Verlagerung eines Hydraulikelements die vorbestimmte Kraft bereitzustellen.

15. Energiespeichereinheit (10) nach einem der Ansprüche 5 bis 14, wobei die Verspannungseinheit (14) eine Pneumatikeinheit aufweist, wobei die Pneumatikeinheit dazu eingerichtet ist durch eine Verlagerung eines Pneumatikelements die vorbestimmte Kraft bereitzustellen.

16. Energiespeichereinheit (10) nach einem der Ansprüche 5 bis 15, wobei die Elektroden-Separator/Elektrolyt-Einheit (12) zumindest ein Formelement (36) aufweist, wobei das Formelement (36) dazu eingerichtet ist seine Höhe (38) anzupassen, wobei die Verspannungseinheit (14) dazu eingerichtet ist, die Höhe (38) des Formelements (36) mittels der vorbestimmten Kraft zu verändern.

17. Energiespeichereinheit (10) nach Anspruch 16, wobei das Formelement (36) eine erste Schicht (40) und eine zweite Schicht (42) aufweist, wobei an der ersten Schicht (40) und zumindest ein Stegelement (44) angeordnet ist, welches dazu eingerichtet ist, die erste Schicht (40) von der zweiten Schicht (42) zu beabstanden.

18. Energiespeichereinheit (10) nach Anspruch 17, wobei das Stegelement (44) zur ersten Schicht (40) um einen Umlenkpunkt (46) an der ersten Schicht (40) auslenkbar und/oder klappbar ist.

19. Verfahren (100) zur Herstellung einer Energiespeichereinheit (10) nach einem der vorherigen Ansprüche, aufweisend die Schritte:
- Bereitstellen (S1) eines Gehäuses (22) für eine Elektroden-Separator/Elektrolyt-Einheit (12),
- Anordnen (S2) eines ersten Begrenzungselements (18) mittels einer Verbindungseinheit (20) an dem Gehäuse (22) der Energiespeichereinheit (10),
- Einbringen (S3) der Elektroden-Separator/Elektrolyt-Einheit (12) in die Energiespeichereinheit (10), sodass die Verbindungseinheit (20) eine Volumenänderung der Elektroden-Separator/Elektrolyt-Einheit (12) folgt.

20. Verfahren (100) nach Anspruch 19, ferner aufweisend den Schritt:
- Anordnen eines Deckels (50) an dem Gehäuse (22) zum Ausbilden eines im Wesentlichen fluiddichten Raums, um die Elektroden-Separator/Elektrolyt-Einheit (12) in der Energiespeichereinheit (10).

21. Fahrzeug (200) aufweisend eine Energiespeichereinheit (10) nach einem der vorherigen Ansprüche 1 bis 18.

22. Batteriespeichersystem (300) für den stationären Einsatz zum Aufnehmen und Abgeben elektrischer Energie, aufweisend eine Vielzahl von Energiespeichereinheiten nach einem der Ansprüche 1 bis 18.
